# EUROPEAN PATENT APPLICATION

(11) **EP 4 625 904 A1**
(43) Date of publication of application: **01.10.2025**
(21) Application number: 22966195.4
(22) Date of filing: 24.11.2022
(51) Int. Cl.: H04L 27/00

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN); YANG, Haorui, Dongguan, Guangdong 523860 (CN)
(74) Representative: Taor, Simon Edward William
(86) International application number: PCT/CN2022/134135
(87) International publication number: WO 2024/108502

(57) **Abstract**

A communication method and a communication apparatus are provided. The method includes the following. A terminal device receives first information from a first core network element, where the first information indicates at least one radio access technology (RAT) type and/or at least one core network (CN) type. With the method in implementations of the present disclosure, service interruption can be avoided.

## Description

### TECHNICAL FIELD

This disclosure relates to the field of communication technology, in particular to a communication method and a communication apparatus.

### BACKGROUND

In some communication systems, when a public land mobile network (PLMN) is disrupted by a natural disaster (such as fire, earthquake, tsunami, etc.) in its coverage area and is unable to provide normal services, a terminal device connected to the PLMN can hand over to a pre-configured network to obtain basic services. However, an existing handover mechanism is not flawless and may result in service interruption.

### SUMMARY

A communication method and a communication apparatus are provided in implementations of the present disclosure. Various aspects involved in implementations of the present disclosure will be introduced below.

In a first aspect, a communication method is provided. The communication method includes the following. A terminal device receives first information from a first core network element, where the first information indicates at least one radio access technology (RAT) type and/or at least one core network (CN) type.

In a second aspect, a communication method is provided. The communication method includes the following. A first core network element sends first information to a terminal device, where the first information indicates at least one RAT type and/or at least one CN type.

In a third aspect, a communication method is provided. The communication method includes the following. After registration with a first core network element is completed by a terminal device, a second core network element sends user data of the terminal device to the first core network element, where the user data contains first information, and the first information indicates at least one RAT type and/or at least one CN type.

In a fourth aspect, a communication apparatus is provided. The communication apparatus includes a receiving unit. The receiving unit is configured to receive first information from a first core network element, where the first information indicates at least one RAT type and/or at least one CN type.

In a fifth aspect, a communication apparatus is provided. The communication apparatus includes a sending unit. The sending unit is configured to send first information to a terminal device, where the first information indicates at least one RAT type and/or at least one CN type.

In a sixth aspect, a communication apparatus is provided. The communication apparatus includes a sending unit. The sending unit is configured to send user data of a terminal device to a first core network element after registration with the first core network element is completed by the terminal device, where the user data contains first information, and the first information indicates at least one RAT type and/or at least one CN type.

In the seventh aspect, a communication apparatus is provided. The communication apparatus includes a memory, a transceiver, and a processor. The memory is configured to store a program. The processor is configured to transmit and receive data via the transceiver, and the processor is configured to invoke the program stored in the memory, to cause the communication apparatus to perform the method in any one of the first aspect to the third aspect.

In an eighth aspect, a communication apparatus is provided. The communication apparatus includes a processor. The processor is configured to invoke a program stored in a memory, to cause the communication apparatus to perform the method in any one of the first aspect to the third aspect.

In a ninth aspect, a chip is provided. The chip includes a processor. The processor is configured to invoke a program stored in a memory, to cause a device equipped with the chip to perform the method in any one of the first aspect to the third aspect.

In a tenth aspect, a computer-readable storage medium is provided. The computer-readable storage medium is configured to store a program that is operable with a computer to perform the method in any one of the first aspect to the third aspect.

In an eleventh aspect, a computer program product is provided. The computer program product includes a program that is operable with a computer to perform the method in any one of the first aspect to the third aspect.

In a twelfth aspect, a computer program is provided. The computer program is operable with a computer to perform the method in any one of the first aspect to the third aspect.

In implementations of the present disclosure, the terminal device receives the first information, where the first information indicates the at least one RAT type and/or the at least one CN type. Therefore, when a network accessed by the terminal device is unable to provide normal services, the terminal device can select a suitable network to serve itself according to the at least one RAT type and/or the at least one CN type, thereby avoiding service interruption.

### BRIEF DESCRIPTION OF THE DRAWINGS

FIG. 1 is an exemplary diagram of a wireless communication system to which implementations of the present disclosure is applicable.
FIG. 2 is a schematic flowchart illustrating a public land mobile network (PLMN) selection performed by a terminal device in implementations of the present disclosure.
FIG. 3 is a schematic flowchart of a communication method provided in an implementation of the present disclosure.
FIG. 4 is a schematic flowchart illustrating a communication method provided in an implementation of the present disclosure.
FIG. 5 is a schematic flowchart illustrating a communication method provided in an implementation of the present disclosure.
FIG. 6 is a schematic flowchart illustrating a communication method provided in an implementation of the present disclosure.
FIG. 7 is a schematic flowchart illustrating a communication method provided in an implementation of the present disclosure.
FIG. 8 is a schematic structural diagram of a communication apparatus provided in an implementation of the present disclosure.
FIG. 9 is a schematic structural diagram of a communication apparatus provided in another implementation of the present disclosure.
FIG. 10 is a schematic structural diagram of a communication apparatus provided in yet another implementation of the present disclosure.
FIG. 11 is a schematic structural diagram of an apparatus provided in an implementation of the present disclosure.

### DETAILED DESCRIPTION

The following will describe technical solutions of the present disclosure with reference to the accompanying drawings.

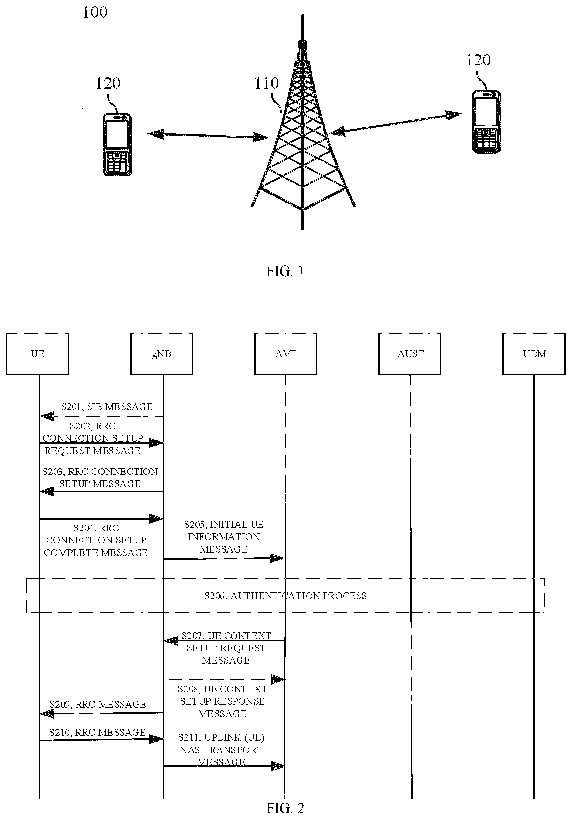

FIG. 1 illustrates a wireless communication system 100 to which implementations of the present disclosure are applicable. The wireless communication system 100 can include a network device 110 and a user equipment (UE) 120. The network device 110 can communicate with the UE 120. The network device 110 can provide communication coverage for a specific geographical area and communicate with the UE 120 in the coverage area. The UE 120 can access a network (such as a wireless network) through the network device 110.

FIG. 1 exemplarily illustrates one network device and two UEs. Optionally, the wireless communication system 100 can include multiple network devices, and there can be other numbers of terminal devices in a coverage area of each network device, which is not limited in implementations of the present disclosure. Optionally, the communication system 100 can also include other network entities such as a network controller, a mobile management entity (MME), etc., which is not limited in implementations of the present disclosure.

It can be understood that the technical solutions of implementations of the present disclosure are applicable to various communication systems, for example, a 5th-generation (5G) system or a new radio (NR), a long-term evolution (LTE) system, an LTE frequency division duplex (LTE-FDD) system, an LTE time division duplex (LTE-TDD) system, etc. The technical solutions provided in the present disclosure are also applicable to future communication systems, for example, a 6th-generation (6G) mobile communication system, a satellite communication system, etc.

The UE in implementations of the present disclosure may also be referred to as a terminal device, an access terminal, a subscriber unit, a subscriber station, a mobile station (MS), a mobile terminal (MT), a remote station, a remote terminal, a mobile device, a user terminal, a terminal, a wireless communication device, a user agent, a user device, etc. The UE in implementations of the present disclosure may refer to a device providing a user with voice and/or data connectivity, and may be configured to connect people, things, and machines, such as a handheld device with a wireless communication function, an in-vehicle device, etc. The UE in implementations of the present disclosure may be a mobile phone, a pad, a notebook computer, a laptop, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in smart city, a wireless terminal in smart home, etc. Optionally, the UE may be used as a base station (BS). For example, the UE may serve as a scheduling entity for providing a sidelink (SL) signal between UEs in vehicle-to-everything (V2X) or device-to-device (D2D), etc. For example, a cellular telephone and a vehicle communicate with each other by using the SL signal. A cellular telephone may communicate with a smart home device, without the need to relay a communication signal through the BS.

The network device in implementations of the present disclosure may be a device configured to communicate with the UE. The network device may also be referred to as an access network device or a radio access network (RAN) device. For example, the network device may be a BS. The network device in implementations of the present disclosure may refer to a radio access network (RAN) node (or device) that connects the UE to a wireless network. The BS may in general cover (or be replaced with) various names such as a node B (NodeB), an evolved NodeB (eNB), a next-generation NodeB (gNB), a relay, an access point (AP), a transmitting and receiving point (TRP), a transmitting point (TP), a master eNodeB (MeNB), a secondary eNodeB (SeNB), a multi-standard radio (MSR) node, a home NodeB, a network controller, an access node, a wireless node, an access point (AP), a transmitting node, a transmitting and receiving node, a base band unit (BBU), a remote radio unit (RRU), an active antenna unit (AAU), a remote radio head (RRH), a central unit (CU), a distributed unit (DU), a positioning node, etc. The BS may be a macro BS, a micro BS, a relay node, a donor node, etc., or a combination of the items listed above.

In some implementations, the network device may be fixed or mobile. For example, a helicopter or an unmanned aerial vehicle (UAV) may serve as a mobile network device. One or more cells may move according to the location of the mobile network device. In another example, a helicopter or a UAV may serve as a device communicating with another network device. In some implementations, the network device may refer to a CU or a DU. Alternatively, the network device may include a CU and a DU. Alternatively, the network device may further include an AAU.

It can be understood that the network device may be deployed on land, including indoor or outdoor, handheld, or in-vehicle, may be deployed on water, or may be deployed on airborne aircraft, balloons, satellites, etc. The scenarios in which the network device is deployed are not limited in implementations of the present disclosure.

It can also be understood that all or some functions of the network device and the UE in the present disclosure may also be implemented through a software function run on hardware, or through a virtual function instantiated on a platform (such as a cloud platform).

The present disclosure provides a communication method and a communication apparatus, which can enable the terminal device to select a suitable network to serve itself, thereby avoiding service interruption. Implementations of the present disclosure are described in detail below in conjunction with FIG. 2 to FIG. 7.

In some communication systems, when a public land mobile network (PLMN) is disrupted by a natural disaster (such as fire, earthquake, tsunami, etc.) in its coverage area and is unable to provide normal services, a terminal device connected to the PLMN can hand over to a pre-configured network to obtain basic services. However, an existing handover mechanism is not flawless and may result in service interruption. For example, a minimization of service interruption (MINT) function is introduced into some communication systems, as such, when the PLMN is disrupted by a natural disaster (such as fire, earthquake, tsunami, etc.) in its coverage area and is unable to provide normal services, the terminal device connected to the PLMN can access a pre-configured MINT network to obtain basic services. For example, the pre-configured MINT network may include a next-generation radio access network (NG-RAN), an evolved universal mobile telecommunication system terrestrial radio access network (E-UTRAN), a universal mobile telecommunication system terrestrial radio access network (UTRAN), etc. When a network to which the terminal device is connected currently is unable to provide normal service, the terminal device can access the NG-RAN, the E-UTRAN, or the UTRAN.

The PLMN may include network elements (NEs) such as a policy control function (PCF), a session management function (SMF), an access and mobility management function (AMF), an authentication service function (AUSF), unified data management (UDM), etc. During an initial access by the UE, the UE can perform PLMN selection and then notify a network side of the selected PLMN. FIG. 2 is a schematic flowchart illustrating a PLMN selection performed by a UE as follows.

S201, a gNB sends and broadcasts a system information block (SIB) message.

The SIB message can include an identifier (ID) of a PLMN supported by the gNB. The gNB can be the network device 110 illustrated in FIG. 1, for example, an NG-RAN.

If multiple PLMN IDs are broadcast in the SIB message, the UE can perform PLMN ID selection and determine a PLMN ID to be selected from the multiple PLMN IDs.

S202, the UE sends a radio resource control (RRC) connection setup request message to the gNB.

The RRC connection setup request message can carry a system architecture evolution (SAE) temporary mobile station identifier (S-TMSI) and an RRC establishment cause value.

S203, the gNB returns an RRC connection setup message to the UE.

S204, the UE sends an RRC connection setup complete message to the gNB.

The RRC connection setup complete message can carry the selected PLMN ID and a non-access stratum (NAS) container, where the NAS container can contain an NAS message-registration request message, and the registration request message can carry information such as a UE ID (the UE ID can include a 5th-generation globally unique temporary identity (5G-GUTI)) or a subscription concealed identifier (SUCI) (when the UE does not have the 5G-GUTI), UE security capability, requested network slice selection assistance information (NSSAI), a last registered tracking area identity (TAI), etc.

S205, the gNB sends an initial UE information message to an AMF.

The gNB can select an AMF according to the selected PLMN ID in the RRC connection setup complete message, and send the initial UE information message to the selected AMF, where the initial UE information message can carry an NAS container, an RRC establishment cause value, and UE location information (ULI) (ULI = PLMN ID + cell id + tracking area code (TAC)).

S206, the AMF triggers an authentication process.

S207, the AMF returns a UE context setup request message to the gNB.

The UE context setup request message can contain an NAS container-registration accept message, a security parameter, allowed NSSAI, and a 5G-S-TMSI. The registration accept message can carry parameters such as allowed NSSAI, a TAI list, a 5G-GUTI, etc.

S208, the gNB returns a UE context setup response message to the AMF.

S209, the gNB sends an RRC message to the UE.

The RRC message can be used for sending the NAS container at S207 to the UE.

S210, the UE sends an RRC message to the gNB.

The RRC message can be used for sending an NAS container, where the NAS container can contain a registration complete message, and the registration complete message can be used for acknowledging the 5G-GUTI at S207.

S211, the gNB sends an uplink (UL) NAS transport message to the AMF.

The UL NAS transport message can carry the NAS container.

In order to support the MINT network, when a network accessed by the UE works normally, the AMF can send a list of PLMN(s) to be used in disaster condition to the UE through a registration accept message (such as the registration accept message at S207). Certainly, a home PLMN (HPLMN) can also configure the list of PLMN(s) to be used in disaster condition for the UE. When PLMN1 accessed by the UE currently is unavailable, PLMN2 can broadcast, through an SIB message, indication information (an indication of accessibility for disaster roaming service) and a list of one or more PLMN(s) with disaster condition for which disaster roaming service is offered by the available PLMN.

Through the processing flow in FIG. 2, the terminal device can select a PLMN network to serve itself. However, when a PLMN is disrupted by a natural disaster (such as fire, earthquake, tsunami, etc.) in its coverage area and is unable to provide normal services, the terminal device connected to the PLMN may be unable to find an available network, and thus service interruption may occur. For example, when only a 5G network of one PLMN is deployed in the disaster area, if the 5G network becomes unavailable, a UE connected to the 5G network will be unable to use other networks to access services, resulting in a prolonged service interruption. In this case, in order to enable the UE to use other networks to access services normally, a 4G network or a 3G network can be temporarily used. However, the existing mechanism cannot enable the UE to hand over to the 4G network or the 3G network smoothly.

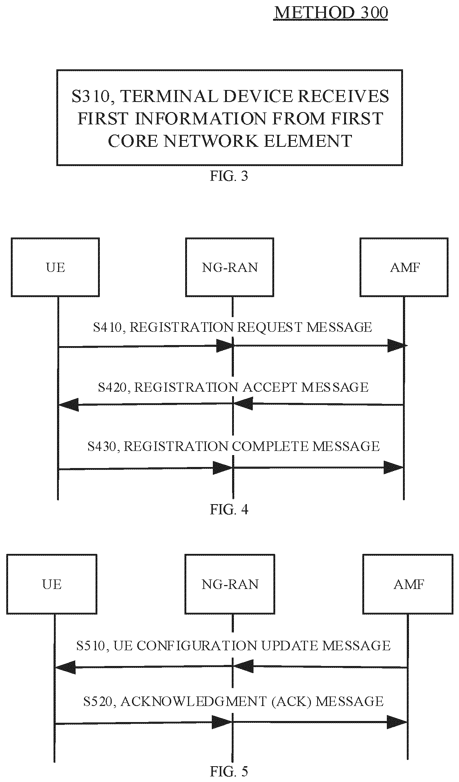

Implementations of the present disclosure are described in detail below with reference to FIG. 3 to FIG. 7.

FIG. 3 is a schematic flowchart of a communication method according to implementations of the present disclosure. The method 300 illustrated in FIG. 3 can include operations at S310 as follows.

S310, a terminal device receives first information from a first core network element.

Optionally, the first core network element may be an AMF or other core network elements. The first information can indicate at least one radio access technology (RAT) type and/or at least one core network (CN) type.

In some implementations, each of the at least one RAT type can include one or more of the following information: an NG-RAN, an E-UTRAN, and a UTRAN. Optionally, in the at least one RAT type, the NG-RAN, the E-UTRAN, and the UTRAN can be represented by different values. For example, the NG-RAN can be represented by 1, the E-UTRAN can be represented by 2, and the UTRAN can be represented by 3.

Optionally, each of the at least one RAT type can also be associated with a PLMN. Optionally, the first information can also indicate a PLMN associated with each of the at least one RAT type.

Optionally, each of the at least one RAT type may be associated with one PLMN, or each of the at least one RAT type may be associated with multiple PLMNs. For example, the PLMN associated with each of the at least one RAT type may be the same, i.e., each of the at least one RAT type can be associated with the same PLMN (one or more PLMNs). Alternatively, the PLMN associated with each of the at least one RAT type may be different (e.g., partially different or completely different), i.e., each of the at least one RAT type can be associated with at least one of the multiple PLMNs (in this case, it is not limited that each of the at least one RAT type is associated with all of the multiple PLMNs).

Optionally, each RAT in the at least one RAT type may be associated with one PLMN, or each RAT in the at least one RAT type may be associated with multiple PLMNs. For example, the at least one RAT type can include one or more RATs. A PLMN associated with each of the one or more RATs may be the same (all of the one or more RATs are associated with one PLMN). Alternatively, the PLMN associated with each of the one or more RATs may be different (e.g., partially different or completely different), i.e., each of the one or more RATs can be associated with at least one of the multiple PLMNs (in this case, it is not limited that each of the one or more RATs is associated with all of the multiple PLMNs).

Optionally, the first information can also indicate a PLMN associated with the at least one RAT type. Optionally, the at least one RAT type can be associated with one or more PLMNs.

In some implementations, each of the at least one CN type can include a 5th-generation core network (5GC) and/or an evolved packet core network (EPC). For example, in the at least one CN type, the 5GC and the EPC can be represented by different values. For example, the 5GC can be represented by 1, and the EPC can be represented by 2.

Optionally, each of the at least one CN type can also be associated with a PLMN. Optionally, the first information can also indicate a PLMN associated with each of the at least one CN type.

Optionally, each of the at least one CN type may be associated with one PLMN, or, each of the at least one CN type may be associated with multiple PLMNs. For example, the PLMN associated with each of the at least one CN type may be the same, i.e., each of the at least one CN type can be associated with the same PLMN (one or more PLMNs). Alternatively, the PLMN associated with each of the at least one CN type may be different (e.g., partially different or completely different), i.e., each of the at least one CN type can be associated with at least one of the multiple PLMNs (in this case, it is not limited that each of the at least one CN type is associated with all of the multiple PLMNs).

Optionally, each CN in the at least one CN type may be associated with one PLMN, or each CN in the at least one CN type may be associated with multiple PLMNs. For example, the at least one CN type can include one or more CNs. A PLMN associated with each of the one or more CNs may be the same (all of the one or more CNs are associated with one PLMN). Alternatively, the PLMN associated with each of the one or more CNs may be different (e.g., partially different or completely different), i.e., each of the one or more CNs can be associated with at least one of the multiple PLMNs (in this case, it is not limited that each of the one or more CNs is associated with all of the multiple PLMNs).

Optionally, the first information can also indicate a PLMN associated with the at least one CN type. Optionally, the at least one CN type can be associated with one or more PLMNs.

Before the operations at S310, the terminal device can send a registration request message to the first core network element.

Optionally, the registration request message can carry one or more of the following information: a 5G-GUTI, UE security capability, and requested NSSAI.

In the present disclosure, the method 300 can be implemented in various manners, which will be described in detail below in conjunction with FIG. 4 to FIG. 7.

Manner 1, the first information can be carried in a registration accept message.

For example, the first core network element can send the registration accept message to the terminal device, where the registration accept message can contain the first information. Further, the terminal device can send a registration complete message to the first core network element.

For example, the first core network element is taken as an AMF, and the method in Manner 1 can be illustrated as a method 400 in FIG. 4. The method 400 includes the following.

S410, a UE sends a registration request message to an AMF through an NG-RAN.

The registration request message can carry a 5G-GUTI, UE security capability, requested NSSAI, etc.

S420, the AMF sends a registration accept message to the UE through the NG-RAN.

The registration accept message can carry first information, and the registration accept message can further carry a new 5G-GUTI of the UE.

S430, the UE sends a registration complete message to the AMF through the NG-RAN.

The registration complete message can be used for acknowledging the new 5G-GUTI of the UE.

Manner 2, the first information may be carried in a UE configuration update message.

For example, after registration with the first core network element is completed by the terminal device, the first core network element can send the UE configuration update message to the terminal device, where the UE configuration update message can contain the first information. Further, the terminal device can send a UE configuration update acknowledgment (ACK) message to the first core network element.

For example, the first core network element is taken as an AMF, and the method in Manner 2 can be illustrated as a method 500 in FIG. 5. The method 500 includes the following.

S510, an AMF sends a UE configuration update message to a UE through an NG-RAN.

After registration with the AMF is completed by the UE, the AMF can send the UE configuration update message to the UE through the NG-RAN, where the UE configuration update message can contain first information, and the UE configuration update message can further carry a new 5G-GUTI of the UE.

S520, the UE sends an ACK message to the AMF through the NG-RAN.

The UE can send a UE configuration update ACK message to the AMF through the NG-RAN, where the UE configuration update ACK message can be used for acknowledging the new 5G-GUTI of the UE.

Manner 1 and Manner 2 can be considered as being sent by a currently visited PLMN (VPLMN) to the UE.

Manner 3, the first information can be carried in the registration accept message. Optionally, the first information can be sent by the first core network element based on user data of the terminal device received by the first core network element from a second core network element. Optionally, the user data may include subscription data of the terminal device, or may include other data of the terminal device. Optionally, the second core network element may be a UDM or other core network elements.

For example, the first core network element can send second information to the second core network element, where the second information is used for requesting the user data of the terminal device. The second information can be carried in a subscription data retrieval (such as Nudm_SDM_Get) message. The second core network element can send the user data of the terminal device to the first core network element in response to the second information, where the user data of the terminal device can contain the first information. The first core network element can send a downlink (DL) NAS transport message to the terminal device, where the DL NAS transport message can contain the first information. Further, the terminal device can send a registration complete message to the first core network element.

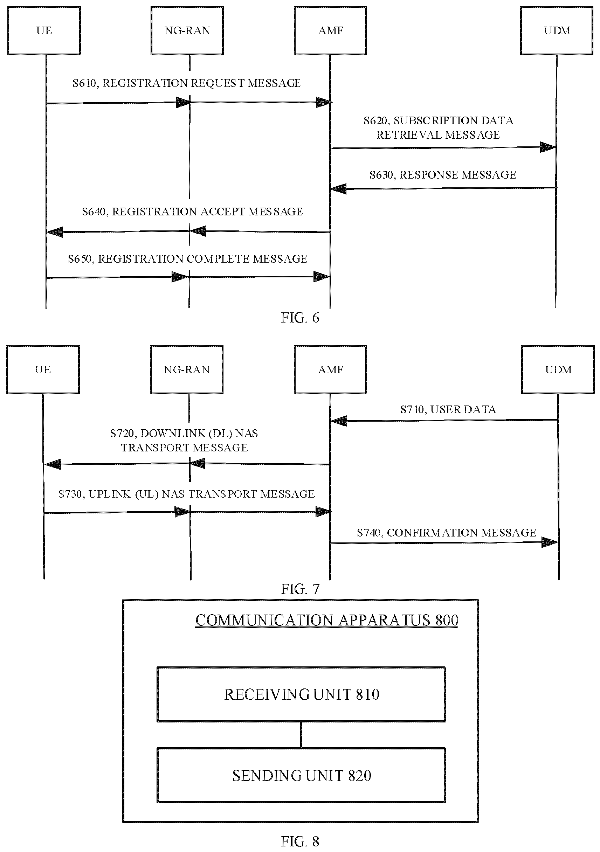

For example, the first core network element is taken as an AMF, the second core network element is taken as a UDM, and the method in Manner can be illustrated in a method 600 in FIG. 6. The method 600 includes the following.

S610, a UE sends a registration request message to an AMF through an NG-RAN.

The registration request message can carry a 5G-GUTI, UE security capability, requested NSSAI, etc.

S620, the AMF sends a subscription data retrieval message to a UDM.

The subscription data retrieval message can be an Nudm_SDM_Get message. The Nudm_SDM_Get message can be used for retrieving user data of the UE.

S630, the UDM sends a response message to the AMF.

The response message can carry the user data of the UE. The user data can contain first information, and the user data can further carry a new 5G-GUTI of the UE. For example, the first information can be carried in the response message as a disaster container and then sent to the AMF.

S640, the AMF sends a registration accept message to the UE.

The registration accept message can carry the first information, and the registration accept message can further carry the new 5G-GUTI of the UE. For example, the first information can be carried in the registration accept message as a disaster container and then sent to the UE. Optionally, the AMF can directly transmit the disaster container transparently to the UE without any processing.

S650, the UE sends a registration complete message to the AMF.

The registration complete message can be used for acknowledging the new 5G-GUTI of the UE.

Manne 4, the first information can be carried in the DL NAS transport message. Optionally, the first information can be sent by the first core network element based on user data of the terminal device received by the first core network element from a second core network element.

After the user data in the second core network element is updated, the second core network element can send the user data of the terminal device to the first core network element, where the user data can contain the first information. The first core network element can send the DL NAS transport message to the terminal device, where the DL NAS transport message can contain the first information. Further, the terminal device can send a UL NAS transport message to the first core network element, where the UL NAS transport message can carry confirmation information. The first core network element can send the confirmation information to the second core network element.

For example, the first core network element is taken as an AMF, the second core network element is taken as a UDM, and the method in Manner 4 can be illustrated in a method 700 in FIG. 7. The method 700 includes the following.

S710, a UDM sends user data to an AMF.

When the user data in the UDM is updated, the UDM can send the user data to the AMF. The user data can contain the first information, and the user data can further carry a new 5G-GUTI of a UE. For example, first information can be carried in a response message as a disaster container and then sent to the AMF.

S720, the AMF sends a DL NAS transport message to the UE.

The DL NAS transport message can carry the first information, and the DL NAS transport message can further carry the new 5G-GUTI of the UE. For example, the first information can be carried in the DL NAS transport message as a disaster container and then sent to the UE. Optionally, the AMF can directly pass the disaster container through to the UE without any processing.

S730, the UE sends a UL NAS transport message to AMF.

The UL NAS transport message can carry confirmation information, where the confirmation information can be used for acknowledging the new 5G-GUTI of the UE.

S740, the AMF sends the confirmation message to the UDM. The confirmation message can be an Nudm_ SDM_Info_Request message.

Manner 3 and Manner 4 can be considered as being sent by a home PLMN (HPLMN) to the UE.

In implementations of the present disclosure, the terminal device receives the first information, where the first information indicates the at least one RAT type and/or the at least one CN type. Therefore, when a network accessed by the terminal device is unable to provide normal services, the terminal device can select a suitable network to serve itself according to the at least one RAT type and/or the at least one CN type, thereby avoiding service interruption.

The method implementations of the present disclosure are described in detail above in conjunction with FIG. 1 to FIG. 7, and apparatus implementations of the present disclosure will be described in detail below in conjunction with FIG. 8 to FIG. 11. It can be understood that illustrations of apparatus implementations and illustrations of method implementations correspond to each other, and therefore, for parts not described in detail, reference can be made to the foregoing method implementations.

FIG. 8 is a schematic structural diagram of a communication apparatus provided in an implementation of the present disclosure. As illustrated in FIG. 8, the apparatus 800 includes a receiving unit 810. The receiving unit 810 is configured to receive first information from a first core network element, where the first information indicates at least one RAT type and/or at least one CN type.

Optionally, each of the at least one RAT type includes one or more of the following information: an NG-RAN, an E-UTRAN, and a UTRAN.

Optionally, the first information further indicates one or more PLMNs associated with each of the at least one RAT type.

Optionally, the first information further indicates one or more PLMNs associated with the at least one RAT type.

Optionally, each of the at least one CN type includes a 5GC and/or an EPC.

Optionally, the first information further indicates one or more PLMNs associated with each of the at least one CN type.

Optionally, the first information further indicates one or more PLMNs associated with the at least one CN type.

Optionally, the receiving unit 810 is specifically configured to receive the first information from the first core network element after registration with the first core network element is completed.

Optionally, the first information is carried in a UE configuration update message.

Optionally, the apparatus 800 further includes a sending unit 820. The sending unit 820 is configured to send a UE configuration update ACK message to the first core network element.

Optionally, the first information is sent by the first core network element based on user data of the apparatus received by the first core network element from a second core network element.

Optionally, the first information is sent by the first core network element based on the user data of the apparatus received by the first core network element from the second core network element after the user data in the second core network element is updated.

Optionally, the first information is carried in a DL NAS transport message.

Optionally, the apparatus 800 further includes the sending unit 820. The sending unit 820 is configured to send a UL NAS transport message to the first core network element, where the UL NAS transport message carries confirmation information.

Optionally, the receiving unit 810 is further configured to receive a registration accept message from the first core network element.

Optionally, the first information is carried in the registration accept message.

Optionally, the apparatus 800 further includes the sending unit 820. The sending unit 820 is configured to a registration request message to the first core network element.

Optionally, the registration request message carries one or more of the following information: a 5G-GUTI, UE security capability, and requested NSSAI.

Optionally, the apparatus 800 further includes the sending unit 820. The sending unit 820 is configured to a registration complete message to the first core network element.

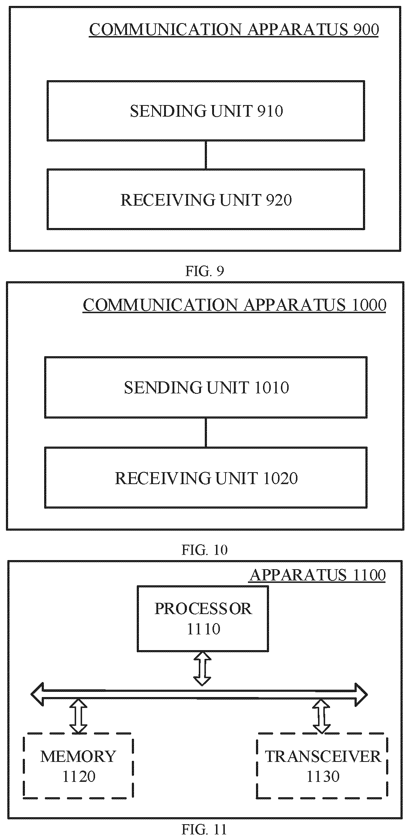

FIG. 9 is a schematic structural diagram of a communication apparatus provided in an implementation of the present disclosure. The communication apparatus 900 in FIG. 9 includes a sending unit 910. The sending unit 910 is configured to send first information to a terminal device, where the first information indicates at least one RAT type and/or at least one CN type.

Optionally, each of the at least one RAT type includes one or more of the following information: an NG-RAN, an E-UTRAN, and a UTRAN.

Optionally, the first information further indicates one or more PLMNs associated with each of the at least one RAT type.

Optionally, the first information further indicates one or more PLMNs associated with the at least one RAT type.

Optionally, each of the at least one CN type includes a 5GC and/or an EPC.

Optionally, the first information further indicates one or more PLMNs associated with each of the at least one CN type.

Optionally, the first information further indicates one or more PLMNs associated with the at least one CN type.

Optionally, the sending unit 910 is specifically configured to send the first information to the terminal device after registration with the apparatus is completed by the terminal device.

Optionally, the first information is carried in a UE configuration update message.

Optionally, the apparatus 900 further includes a receiving unit 920. The receiving unit 920 is configured to receive a UE configuration update ACK message from the terminal device.

Optionally, the first information is sent by the apparatus based on user data of the terminal device received by the apparatus from a second core network element.

Optionally, the sending unit 910 is further configured to send second information to the second core network element, where the second information is used for requesting the user data of the terminal device. The apparatus 900 further includes the receiving unit 920. The receiving unit 920 is configured to receive the user data of the terminal device from the second core network element, where the user data of the terminal device contains the first information.

Optionally, the second information is carried in a subscription data retrieval message, and the user data of the terminal device is carried in a subscription data retrieval response message.

Optionally, the first information is sent by the apparatus based on the user data of the terminal device received by the apparatus from the second core network element after the user data of the terminal device is updated.

Optionally, the first information is carried in a DL NAS transport message.

Optionally, the apparatus 900 further includes the receiving unit 920. The receiving unit 920 is configured to receive a UL NAS transport message from the terminal device, where the UL NAS transport message carries confirmation information. The sending unit 910 is further configured to send the confirmation information to the second core network element.

Optionally, the sending unit 910 is further configured to send a registration accept message to the terminal device.

Optionally, the first information is carried in the registration accept message.

Optionally, the apparatus 900 further includes the receiving unit 920. The receiving unit 920 is configured to a registration request message from the terminal device.

Optionally, the registration request message carries one or more of the following information: a 5G-GUTI, UE security capability, and requested NSSAI.

Optionally, the apparatus 900 further includes the receiving unit 920. The receiving unit 920 is configured to receive a registration complete message from the terminal device.

FIG. 10 is a schematic structural diagram of a communication apparatus provided in an implementation of the present disclosure. As illustrated in FIG. 10, the apparatus 1000 includes a sending unit 1010. The sending unit 1010 is configured to send user data of a terminal device to a first core network element after registration with the first core network element is completed by the terminal device, where the user data contains first information, and the first information indicates at least one RAT type and/or at least one CN type.

Optionally, the apparatus 1000 further includes a receiving unit 1020. The receiving unit 1020 is configured to receive second information from the first core network element, where the second information is used for requesting user data of the terminal device. The sending unit 1010 is specifically configured to send the user data of the terminal device to the first core network element in response to the second information.

Optionally, the second information is carried in a subscription data retrieval message, and the user data of the terminal device is carried in a subscription data retrieval response message.

Optionally, the sending unit 1010 is specifically configured to send the user data of the terminal device to the first core network element after the user data of the terminal device is updated.

Optionally, the apparatus 1000 further includes the receiving unit 1020. The receiving unit 1020 is configured to receive confirmation information from the first core network element.

FIG. 11 is a schematic structural diagram of an apparatus provided in an implementation of the present disclosure. A dotted line in FIG. 11 represents an optional unit or module. The apparatus 1100 can be configured to implement the method described in the above method implementations. The apparatus 1100 may be a chip or a communication apparatus.

The apparatus 1100 may include one or more processors 1110. The one or more processors 1110 can support the apparatus 900 to implement the method described in the above method implementations. The processor 1110 may be a general-purpose processor or a dedicated processor. For example, the processor may be a central processing unit (CPU). Alternatively, the processor may be another general-purpose processor, a digital signal processor (DSP), an application-specific integrated circuit (ASIC), a field programmable gate array (FPGA), or another programmable logic device, a discrete gate, or a transistor logic device, a discrete hardware component, etc. The general-purpose processor may be a microprocessor or any conventional processor, etc.

The apparatus 1100 may further include one or more memories 1120. The memory 1120 is configured to store a program. The program may be executed by the processor 1110, to cause the processor 1110 to implement the method described in the above method implementations. The memory 1120 may be separate from the processor 1110, or may be integrated into the processor 1110.

The apparatus 1100 may further include a transceiver 1130. The processor 1110 can communicate with another device or chip through the transceiver 1130. For example, the processor 1110 can transmit and receive data with another device or chip via the transceiver 1130.

A computer-readable storage medium is further provided in implementations of the present disclosure. The computer-readable storage medium is configured to store a program. The computer-readable storage medium is applicable to the communication apparatus in implementations of the present disclosure, and the program causes a computer to perform the method implemented by the communication apparatus in various implementations of the present disclosure.

A computer program product is further provided in implementations of the present disclosure. The computer program product includes a program. The computer program product is applicable to the communication apparatus in implementations of the present disclosure, and the program causes a computer to perform the method implemented by the communication apparatus in various implementations of the present disclosure.

A computer program is further provided in implementations of the present disclosure. The computer program is applicable to the communication apparatus in implementations of the present disclosure, and causes a computer to perform the method implemented by the communication apparatus in various implementations of the present disclosure.

It can be understood that, in implementations of the present disclosure, "B corresponding to A" indicates that B is associated with A, and B may be determined according to A. However, it can be further understood that, "determine B according to A" does not mean that B is determined according to A only, and B may also be determined according to A and/or other information.

It can be understood that the term "and/or" herein only describes an association relationship between associated objects, which means that there can be three relationships. For example, A and/or B can mean A alone, both A and B exist, and B alone. In addition, the character "/" herein can indicate that the associated objects are in an "or" relationship.

It can be understood that, in various implementations of the present disclosure, the magnitude of a sequence number of each process does not mean an order of execution, and the order of execution of each process can be determined by its function and internal logic and shall not constitute any limitation to the implementation of implementations of the present disclosure.

It will be appreciated that the systems, apparatuses, and methods disclosed in implementations of the present disclosure may also be implemented in various other manners. For example, the above apparatus implementations are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve the desired objectives of the present disclosure.

In addition, various functional units described in various implementations of the present disclosure may be integrated into one processing unit or may be present as a number of physically separated units, and two or more units may be integrated into one.

All or some of the implementations can be implemented through software, hardware, firmware, or any other combination thereof. When implemented by software, all or some of the implementations can be implemented in the form of a computer program product. The computer program product includes one or more computer instructions. When the computer instructions are applied and executed on a computer, all or some of the operations or functions of implementations of the present disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any available medium that can be read by a computer or a data storage device, such as a server, a data center, etc., that integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely implementations of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A communication method, comprising:
receiving, by a terminal device, first information from a first core network element, wherein the first information indicates at least one radio access technology (RAT) type and/or at least one core network (CN) type.

2. The method of claim 1, wherein each of the at least one RAT type comprises one or more of the following information: a next-generation radio access network (NG-RAN), an evolved universal mobile telecommunication system terrestrial radio access network (E-UTRAN), and a universal mobile telecommunication system terrestrial radio access network (UTRAN).

3. The method of claim 1 or 2, wherein the first information further indicates one or more public land mobile networks (PLMNs) associated with each of the at least one RAT type.

4. The method of claim 1 or 2, wherein the first information further indicates one or more PLMNs associated with the at least one RAT type.

5. The method of any one of claims 1 to 4, wherein each of the at least one CN type comprises a 5th-generation core network (5GC) and/or an evolved packet core network (EPC).

6. The method of any one of claims 1 or 5, wherein the first information further indicates one or more PLMNs associated with each of the at least one CN type.

7. The method of claim 1 or 5, wherein the first information further indicates one or more PLMNs associated with the at least one CN type.

8. The method of any one of claims 1 to 7, wherein receiving, by the terminal device, the first information from the first core network element comprises:
receiving, by the terminal device, the first information from the first core network element after registration with the first core network element is completed by the terminal device.

9. The method of claim 8, wherein the first information is carried in a user equipment (UE) configuration update message.

10. The method of claim 9, further comprising:
sending, by the terminal device, a UE configuration update acknowledgment (ACK) message to the first core network element.

11. The method of any one of claims 1 to 7, wherein the first information is sent by the first core network element based on user data of the terminal device received by the first core network element from a second core network element.

12. The method of claim 11, wherein the first information is sent by the first core network element based on the user data of the terminal device received by the first core network element from the second core network element after the user data in the second core network element is updated.

13. The method of claim 12, wherein the first information is carried in a downlink (DL) non-access stratum (NAS) transport message.

14. The method of claim 12 or 13, further comprising:
sending, by the terminal device, an uplink (UL) NAS transport message to the first core network element, wherein the UL NAS transport message carries confirmation information.

15. The method of any one of claims 1 to 7 or 10, further comprising:
receiving, by the terminal device, a registration accept message from the first core network element.

16. The method of claim 15, wherein the first information is carried in the registration accept message.

17. The method of any one of claims 1 to 16, further comprising:
sending, by the terminal device, a registration request message to the first core network element.

18. The method of claim 17, wherein the registration request message carries one or more of the following information: a 5th-generation globally unique temporary identity (5G-GUTI), UE security capability, and requested network slice selection assistance information (NSSAI).

19. The method of any one of claims 1 to 18, further comprising:
sending, by the terminal device, a registration complete message to the first core network element.

20. A communication method, comprising:
sending, by a first core network element, first information to a terminal device, wherein the first information indicates at least one radio access technology (RAT) type and/or at least one core network (CN) type.

21. The method of claim 20, wherein each of the at least one RAT type comprises one or more of the following information: a next-generation radio access network (NG-RAN), an evolved universal mobile telecommunication system terrestrial radio access network (E-UTRAN), and a universal mobile telecommunication system terrestrial radio access network (UTRAN).

22. The method of claim 20 or 21, wherein the first information further indicates one or more public land mobile networks (PLMNs) associated with each of the at least one RAT type.

23. The method of claim 20 or 21, wherein the first information further indicates one or more PLMNs associated with the at least one RAT type.

24. The method of any one of claims 20 to 23, wherein each of the at least one CN type comprises a 5th-generation core network (5GC) and/or an evolved packet core network (EPC).

25. The method of claim 20 or 24, wherein the first information further indicates one or more PLMNs associated with each of the at least one CN type.

26. The method of claim 20 or 24, wherein the first information further indicates one or more PLMNs associated with the at least one CN type.

27. The method of any one of claims 20 to 26, wherein sending, by the first core network element, the first information to the terminal device comprises:
sending, by the first core network element, the first information to the terminal device after registration with the first core network element is completed by the terminal device.

28. The method of claim 27, wherein the first information is carried in a user equipment (UE) configuration update message.

29. The method of claim 28, further comprising:
receiving, by the first core network element, a UE configuration update acknowledgment (ACK) message from the terminal device.

30. The method of any one of claims 20 to 26, wherein the first information is sent by the first core network element based on user data of the terminal device received by the first core network element from a second core network element.

31. The method of claim 30, further comprising:
sending, by the first core network element, second information to the second core network element, wherein the second information is used for requesting the user data of the terminal device; and
receiving, by the first core network element, the user data of the terminal device from the second core network element, wherein the user data of the terminal device contains the first information.

32. The method of claim 31, wherein the second information is carried in a subscription data retrieval message, and the user data of the terminal device is carried in a subscription data retrieval response message.

33. The method of claim 30, wherein the first information is sent by the first core network element based on the user data of the terminal device received by the first core network element from the second core network element after the user data of the terminal device is updated.

34. The method of claim 33, wherein the first information is carried in a downlink (DL) non-access stratum (NAS) transport message.

35. The method of claim 33 or 34, further comprising:
receiving, by the first core network element, an uplink (UL) NAS transport message from the terminal device, wherein the UL NAS transport message carries confirmation information; and
sending, by the first core network element, the confirmation information to the second core network element.

36. The method of any one of claims 20 to 30 or any one of claimS33 to 35, further comprising:
sending, by the first core network element, a registration accept message to the terminal device.

37. The method of claim 36, wherein the first information is carried in the registration accept message.

38. The method of any one of claims 20 to 37, further comprising:
receiving, by the first core network element, a registration request message from the terminal device.

39. The method of claim 38, wherein the registration request message carries one or more of the following information: a 5th-generation globally unique temporary identity (5G-GUTI), UE security capability, and requested network slice selection assistance information (NSSAI).

40. The method of any one of claims 20 to 39, further comprising:
receiving, by the first core network element, a registration complete message from the terminal device.

41. A communication method, comprising:
sending, by a second core network element, user data of a terminal device to a first core network element after access to and registration with the first core network element is completed by the terminal device, wherein the user data contains first information, and the first information indicates at least one radio access technology (RAT) type and/or at least one core network (CN) type.

42. The method of claim 41, further comprising:
receiving, by the second core network element, second information from the first core network element, wherein the second information is used for requesting the user data of the terminal device, wherein
sending, by the second core network element, the user data of the terminal device to the first core network element comprises:
sending, by the second core network element, the user data of the terminal device to the first core network element in response to the second information.

43. The method of claim 42, wherein the second information is carried in a subscription data retrieval message, and the user data of the terminal device is carried in a subscription data retrieval response message.

44. The method of claim 41, wherein sending, by the second core network element, the user data of the terminal device to the first core network element comprises:
sending, by the second core network element, the user data of the terminal device to the first core network element after the user data of the terminal device is updated.

45. The method of claim 44, further comprising:
receiving, by the second core network element, confirmation information from the first core network element.

46. A communication apparatus, comprising:
a receiving unit configured to receive first information from a first core network element, wherein the first information indicates at least one radio access technology (RAT) type and/or at least one core network (CN) type.

47. The apparatus of claim 46, wherein each of the at least one RAT type comprises one or more of the following information: a next-generation radio access network (NG-RAN), an evolved universal mobile telecommunication system terrestrial radio access network (E-UTRAN), and a universal mobile telecommunication system terrestrial radio access network (UTRAN).

48. The apparatus of claim 46 or 47, wherein the first information further indicates one or more public land mobile networks (PLMNs) associated with each of the at least one RAT type.

49. The apparatus of claim 46 or 47, wherein the first information further indicates one or more PLMNs associated with the at least one RAT type.

50. The apparatus of any one of claims 46 to 49, wherein each of the at least one CN type comprises a 5th-generation core network (5GC) and/or an evolved packet core network (EPC).

51. The apparatus of claim 46 or 50, wherein the first information further indicates one or more PLMNs associated with each of the at least one CN type.

52. The apparatus of claim 46 or 50, wherein the first information further indicates one or more PLMNs associated with the at least one CN type.

53. The apparatus of any one of claims 46 to 52, wherein the receiving unit is specifically configured to receive the first information from the first core network element after registration with the first core network element is completed by the terminal device.

54. The apparatus of claim 53, wherein the first information is carried in a user equipment (UE) configuration update message.

55. The apparatus of claim 54, further comprising:
a sending unit configured to send a UE configuration update acknowledgment (ACK) message to the first core network element.

56. The apparatus of any one of claims 46 to 52, wherein the first information is sent by the first core network element based on user data of the apparatus received by the first core network element from a second core network element.

57. The apparatus of claim 56, wherein the first information is sent by the first core network element based on the user data of the apparatus received by the first core network element from the second core network element after the user data in the second core network element is updated.

58. The apparatus of claim 57, wherein the first information is carried in a downlink (DL) non-access stratum (NAS) transport message.

59. The apparatus of claim 57 or 58, further comprising:
a sending unit configured to send an uplink (UL) NAS transport message to the first core network element, wherein the UL NAS transport message carries confirmation information.

60. The apparatus of any one of claims 46 to 52 or 14, wherein the receiving unit is further configured to receive a registration accept message from the first core network element.

61. The apparatus of claim 60, wherein the first information is carried in the registration accept message.

62. The apparatus of any one of claims 46 to 61, further comprising:
a sending unit configured to send a registration request message to the first core network element.

63. The apparatus of claim 62, wherein the registration request message carries one or more of the following information: a 5th-generation globally unique temporary identity (5G-GUTI), UE security capability, and requested network slice selection assistance information (NSSAI).

64. The apparatus of any one of claims 46 to 63, further comprising:
a sending unit configured to send a registration complete message to the first core network element.

65. A communication apparatus, comprising:
a sending unit configured to send first information to a terminal device, wherein the first information indicates at least one radio access technology (RAT) type and/or at least one core network (CN) type.

66. The apparatus of claim 65, wherein each of the at least one RAT type comprises one or more of the following information: a next-generation radio access network (NG-RAN), an evolved universal mobile telecommunication system terrestrial radio access network (E-UTRAN), and a universal mobile telecommunication system terrestrial radio access network (UTRAN).

67. The apparatus of claim 65 or 66, wherein the first information further indicates one or more public land mobile networks (PLMNs) associated with each of the at least one RAT type.

68. The apparatus of claim 65 or 66, wherein the first information further indicates one or more PLMNs associated with the at least one RAT type.

69. The apparatus of any one of claims 65 to 68, wherein each of the at least one CN type comprises a 5th-generation core network (5GC) and/or an evolved packet core network (EPC).

70. The apparatus of any one of claims 65 to 69, wherein the first information further indicates one or more PLMNs associated with each of the at least one CN type.

71. The apparatus of claim 65 or 69, wherein the first information further indicates one or more PLMNs associated with the at least one CN type.

72. The apparatus of any one of claims 65 to 71, wherein the sending unit is specifically to send the first information to the terminal device after registration with the apparatus is completed by the terminal device.

73. The apparatus of claim 72, wherein the first information is carried in a user equipment (UE) configuration update message.

74. The apparatus of claim 73, further comprising:
a receiving unit configured to receive a UE configuration update acknowledgment (ACK) message from the terminal device.

75. The apparatus of any one of claims 65 to 71, wherein the first information is sent by the apparatus based on user data of the terminal device received by the apparatus from a second core network element.

76. The apparatus of claim 75, wherein
the sending unit is further configured to send second information to the second core network element, wherein the second information is used for requesting the user data of the terminal device; and
the apparatus further comprises a receiving unit configured to receive the user data of the terminal device from the second core network element, wherein the user data of the terminal device contains the first information.

77. The apparatus of claim 76, wherein the second information is carried in a subscription data retrieval message, and the user data of the terminal device is carried in a subscription data retrieval response message.

78. The apparatus of claim 75, wherein the first information is sent by the apparatus based on the user data of the terminal device received by the apparatus from the second core network element after the user data of the terminal device is updated.

79. The apparatus of claim 78, wherein the first information is carried in a downlink (DL) non-access stratum (NAS) transport message.

80. The apparatus of claim 78 or 79, further comprising:
a receiving unit configured to receive an uplink (UL) NAS transport message from the terminal device, wherein the UL NAS transport message carries confirmation information; and
the sending unit further configured to send the confirmation information to the second core network element.

81. The apparatus of any one of claims 65 to 71 or any one of claims 74 to 76, wherein the sending unit is further configured to send a registration accept message to the terminal device.

82. The apparatus of claim 81, wherein the first information is carried in the registration accept message.

83. The apparatus of any one of claims 65 to 82, further comprising:
a receiving unit configured to receive a registration request message from the terminal device.

84. The apparatus of claim 83, wherein the registration request message carries one or more of the following information: a 5th-generation globally unique temporary identity (5G-GUTI), UE security capability, and requested network slice selection assistance information (NSSAI).

85. The apparatus of any one of claims 65 to 84, further comprising:
a receiving unit configured to receive a registration complete message from the terminal device.

86. A communication apparatus, comprising:
a sending unit configured to send user data of a terminal device to a first core network element after registration with the first core network element is completed by the terminal device, wherein the user data contains first information, and the first information indicates at least one radio access technology (RAT) type and/or at least one core network (CN) type.

87. The apparatus of claim 86, further comprising:
a receiving unit configured to receive second information from an AMF, wherein the second information is used for requesting user data of the terminal device; and
the sending unit specifically configured to send the user data of the terminal device to the first core network element in response to the second information.

88. The apparatus of claim 87, wherein the second information is carried in a subscription data retrieval message, and the user data of the terminal device is carried in a subscription data retrieval response message.

89. The apparatus of claim 86, wherein the sending unit is specifically configured to send the user data of the terminal device to the first core network element after the user data of the terminal device is updated.

90. The apparatus of claim 89, further comprising:
a receiving unit configured to receive confirmation information from the first core network element.

91. A communication apparatus, comprising a memory, a transceiver, and a processor, wherein the memory is configured to store a program, the processor is configured to transmit and receive data via the transceiver, and the processor is configured to invoke the program stored in the memory, to cause the communication apparatus to perform the method of any one of claims 1 to 19.

92. A communication apparatus, comprising a memory, a transceiver, and a processor, wherein the memory is configured to store a program, the processor is configured to transmit and receive data via the transceiver, and the processor is configured to invoke the program stored in the memory, to cause the communication apparatus to perform the method of any one of claims 20 to 40.

93. A communication apparatus, comprising a memory, a transceiver, and a processor, wherein the memory is configured to store a program, the processor is configured to transmit and receive data via the transceiver, and the processor is configured to invoke the program stored in the memory, to cause the communication apparatus to perform the method of any one of claims 41 to 45.

94. A communication apparatus, comprising:
a processor configured to invoke a program stored in a memory, to cause the communication apparatus to perform the method of any one of claims 1 to 19.

95. A communication apparatus, comprising:
a processor configured to invoke a program stored in a memory, to cause the communication apparatus to perform the method of any one of claims 20 to 40.

96. A communication apparatus, comprising:
a processor configured to invoke a program stored in a memory, to cause the communication apparatus to perform the method of any one of claims 41 to 45.

97. A chip, comprising:
a processor configured to invoke a program stored in a memory, to cause a device equipped with the chip to perform the method of any of claims 1 to 19.

98. A chip, comprising:
a processor configured to invoke a program stored in a memory, to cause a device equipped with the chip to perform the method of any of claims 20 to 40.

99. A chip, comprising:
a processor configured to invoke a program stored in a memory, to cause a device equipped with the chip to perform the method of any of claims 41 to 45.

100. A computer-readable storage medium configured to store a program that is operable with a computer to perform the method of any of claims 1 to 19.

101. A computer-readable storage medium configured to store a program that is operable with a computer to perform the method of any of claims 20 to 40.

102. A computer-readable storage medium configured to store a program that is operable with a computer to perform the method of any of claims 41 to 45.

103. A computer program product comprising a program that is operable with a computer to perform the method of any of claims 1 to 19.

104. A computer program product comprising a program that is operable with a computer to perform the method of any of claims 20 to 40.

105. A computer program product comprising a program that is operable with a computer to perform the method of any of claims 41 to 45.

106. A computer program being operable with a computer to perform the method of any one of claims 1 to 19.

107. A computer program being operable with a computer to perform the method of any one of claims 20 to 40.

108. A computer program being operable with a computer to perform the method of any one of claims 41 to 45.
